# EUROPÄISCHE PATENTSCHRIFT

(11) **EP 2 560 503 B1**
(45) Veröffentlichungstag und Bekanntmachung des Hinweises auf die Patenterteilung: **13.12.2023**
(21) Anmeldenummer: 10776548.9
(22) Anmeldetag: 14.10.2010
(51) Int. Cl.: A23J 1/14, B07B 1/15, B07B 7/00, B07B 9/00, C10L 5/44, C10L 5/36, A23K 10/37, A23K 20/147

(54) **VERFAHREN UND ANLAGE ZUR AUFBEREITUNG VON SONNENBLUMEN-EXTRAKTIONSSCHROT**
PROCESS AND SYSTEM FOR THE PROCESSING OF EXTRACTION MEAL FROM SUNFLOWER SEEDS
PROCEDE ET INSTALLATION POUR LE TRAITEMENT DE GRUAU D'EXTRACTION DE GRAINES DE TOURNESOL

(30) Priorität: 23.04.2010 DE 102010018220
(43) Veröffentlichungstag der Anmeldung: 27.02.2013
(73) Patentinhaber: HiProSUN High Protein SunFlower Extraction Meal GmbH, 91154 Roth (DE)
(72) Erfinder: BAZAK, Erhard, 44265 Dortmund (DE); TAUTPHOEUS, Andreas, Freiherr von, 8156 Oberhasli (CH)
(74) Vertreter: Barth, Ulrich
(86) Internationale Anmeldenummer: PCT/EP2010/006278
(87) Internationale Veröffentlichungsnummer: WO 2011/131218

(56) Entgegenhaltungen:
- EP-A1- 0 919 294
- EP-A1- 1 908 355
- EP-A1- 2 163 159
- EP-B1- 1 372 409
- WO-A2-02/080699
- FR-A1- 2 577 235
- US-A1- 2004 091 600

## Beschreibung

Die Erfindung richtet sich auf ein Verfahren und eine Anlage zur Aufbereitung von Sonnenblumen-Extraktionsschrot der im Oberbegriff des Anspruches 1 angegebenen Gattung.

Aus der EP 1 372 409 B ist ein Verfahren und eine Anlage zur Aufbereitung von Extraktionsschrot aus Sonnenblumensaat für die Tierernährung bekannt, wobei dort durch Zerkleinerungs- und Siebschritte und eine Trennung durch Windsichten zwei Fraktionen von Schrotbestandteilen erzeugt werden sollen, wobei eine Fraktion einen höheren Anteil an Rohprotein als die andere Fraktion aufweist, um die jeweiligen Fraktionen unterschiedlichen Tieren als Futtermittel bzw. Beimischung für Futtermittel zuführen zu können. Dabei soll die Fraktion mit hohem Rohprotein-Gehalt für Monogastrier geeignet sein und die Fraktion mit niedrigerem Rohprotein-Gehalt für Polygastrier (Widerkäuer), deren Mägen Enzyme besitzen, um Cellulose zu spalten, was bei Wirbeltieren mit einteiligem Magen nicht der Fall ist. Des weiteren ist aus EP 0919 294 ein Verfahren zur Trennung von Cerealien in eine proteinreiche und eine proteinarme Fraktion durch Mahlung und Windsichtung bekannt, wobei ein zweimaliges Vermahlen mit anschliessender Windsichtung erfolgt. Ein Verfahren zur Extraktion und Aufreinigung von Erbsenmehl beinhaltend einen Wassertrennungsschritt wird in der US 2004/0091600 beschrieben.

Es hat sich gezeigt, dass die Verfahrensweise nach der gattungsbildenden Druckschrift zu keinen befriedigenden Ergebnissen führt, nicht zuletzt, was die wirtschaftliche Auswertung einer solchen Trennung angeht.

Hier setzt die Erfindung an, deren Aufgabe darin besteht, den Extraktionsschrot von Sonnenblumen, der bei der Sonnenblumenöl-Herstellung anfällt, so aufzubereiten, dass er vielfach und insbesondere sinnvoll verwertbar ist.

Mit einem Verfahren der eingangs bezeichneten Art wird diese Aufgabe gemäß der Erfindung durch die kennzeichnenden Merkmale des Hauptanspruches gelöst.

Die Ergebnisse der Trennung in wirtschaftlich sehr gut zu verwertende Fraktionen ist nach der Erfindung gegeben, da die Proteine am cellulosen Fasermaterial durch Schlagprallmühlen und/oder Riffelwalzen besser gewonnen werden können, was einen wesentlichen Punkt der Erfindung darstellt ebenso wie die Trennung der Pflanzenschalen (Fasern) und Proteine durch eine Wassertrennung.Dadurch, dass das jeweilige Gemisch einer Schlagdauer von 5 bis 30 Sekunden unterworfen wird, lässt sich eine optimale Aufbereitung erreichen.

Ein Vorteil der Erfindung besteht darin, eine Fraktion von Feinpartikeln zu erreichen, die einen hohen bis sehr hohen Proteingehalt aufweist und eine andere Fraktion, die einen hohen bis sehr hohen Zellstoffanteil aufweist, so dass sich daraus schadstoffarme Pellets zum Verheizen, d.h. zur Energieerzeugung, herstellen lassen.

Die Erfindung sieht auch eine Anlage zur Durchführung des Verfahrens nach einem der vorangehenden Ansprüche vor, die gekennzeichnet ist durch wenigstens zwei Prallmühlen und/oder Riffelwalzen-Mahlwerke, eine Wassertrennanlage, in Form eines Wasserabscheiders Trocknungseinrichtungen, Silos für den Extraktionsschrot und die gewonnenen Produkte sowie entsprechende Fördereinrichtungen zwischen den Anlageelementen und in Ausgestaltung durch eine Pelleterzeugungseinrichtung.

Ausgestaltungen der Erfindung ergeben sich aus den Unteransprüchen. Es werden wenigstens zwei Zerkleinerungsschritte in einer Schlagprallmühle und/oder Riffelwalzen mit nachfolgendem Sieben eingesetzt wobei die Erfindung auf diese Anzahl der Zerkleinerungsschritte nicht beschränkt ist.

Mit der im gattungsbildenden Stand der Technik beschriebenen Verfahrensweise lassen sich nicht Fraktionen mit hohen Proteingehalten und Fraktionen geringerer Proteingehalte erzielen, da durch diese Mahltechnik die Proteine immer noch im hohen Maße an den Cellulosepartikeln haften.

In Ausgestaltung ist vorgesehen, dass eine Trennung der Pflanzenschalen (Fasern) und Proteine durch Einbringen in einen Wasserabscheider und Entnehmen der schwimmenden Teile und der sich absetzenden Teile vorgenommen wird. Hier ist eine gute Trennung möglich, da sich die proteinreichen Kleinpartikel in einem solchen Bad absetzen, während die cellulosereichen Partikel aufschwimmen und damit abgezogen werden können.

Die Erfindung ist nachstehend anhand der Zeichnung beispielsweise näher erläutert. Diese zeigt in
- Fig. 1: ein Prinzipbild einer erfindungsgemäßen Anlage zur Durchführung des Verfahrens sowie in
- Fig. 2: ein abgewandeltes Ausführungsbeispiel.

Die allgemein mit 1 bezeichnete Anlage wird, stark vereinfacht, durch einige Anlageteile gebildet, nämlich beispielsweise ein Vorratssilo 2 für das Ausgangsprodukt, einige mit 3 bezeichnete Prallmühlen, Siebeinrichtungen 4, einen Wasserabscheider 5, eine Trocknungseinrichtung 6, einen angedeuteten Windsichter 7 sowie eine Einrichtung 8 zur Erzeugung von Brennpellets 9.

Die jeweils aus den Sieben abgezogenen proteinreichen Fraktionen werden gesammelt, was durch Silos 10 angedeutet ist. Hier können auch andere Sammeleinrichtungen vorgesehen sein. Wie sich aus der Figur ergibt, wird zunächst der Extraktionsschrot aus dem Silo 2 einer ersten Prallmühle 3 zugeführt, dort bis zu 30 Sekunden bearbeitet und nachfolgend einer ersten Siebeinrichtung 4 aufgegeben. Die Siebmaschengröße liegt dabei unter 500 µm, vorzugsweise bei 200 bis 300 µm. Die ausgesiebte Fraktion wird (Pfeil 11) abgezogen und im dargestellten Beispiel in einem ersten Silo 10 abgelagert.

Die Grobpartikel aus der ersten Siebung 4 werden wiederum einer Prallmühle 3a zugeführt und nach einer entsprechenden Behandlung erneut einer Siebeinrichtung 4a, wobei das Feinprodukt wieder einem Silo 10a zugeführt wird.

Anschließend werden die Grobpartikel in eine weitere Prallmühle 3b geleitet. Das dann erzeugte Produkt wird schließlich einem Wasserabscheider 5 aufgegeben. Dabei schwimmt die cellulosereiche Fraktion 12 auf, während sich die proteinreichen Feinteile im Wasserabscheider unten absetzen, was durch kleine Punkte angedeutet und mit 13 bezeichnet ist.

Beide Fraktionen 12 und 13 werden getrocknet, was durch einen Ventilator 6 in den Figuren angedeutet ist, die aufschwimmende Nassfraktion gemäß Pfeil 14, die abgesetzte Nassfraktion gemäß Pfeil 15, wobei letztere nach der Trocknung wiederum einem Aufnahmebehälter 10b zugeführt wird.

Die getrocknete, aufschwimmende Nassfraktion wird nach Verlassen der Trocknungseinrichtung nochmals über einen Windsichter 7 geführt, wobei dann das entstehende Feinmaterial wiederum gesammelt wird, was durch ein angedeutetes Silo 10c in den Figuren dargestellt ist.

Hinter dem Windsichter ist noch eine Pelleterzeugungseinrichtung, etwa eine Presse 8, dargestellt, mit der aus dem getrockneten groben Material Brennpellets 9 erzeugt werden, die dann z.B. in einer Energieerzeugungsanlage verbrannt werden können.

Das proteinreiche, feine Produkt wird aus den Silos 10 dann dem weiteren Gebrauch zugeführt, z.B. als Futterbeimischung für Tiernahrung.

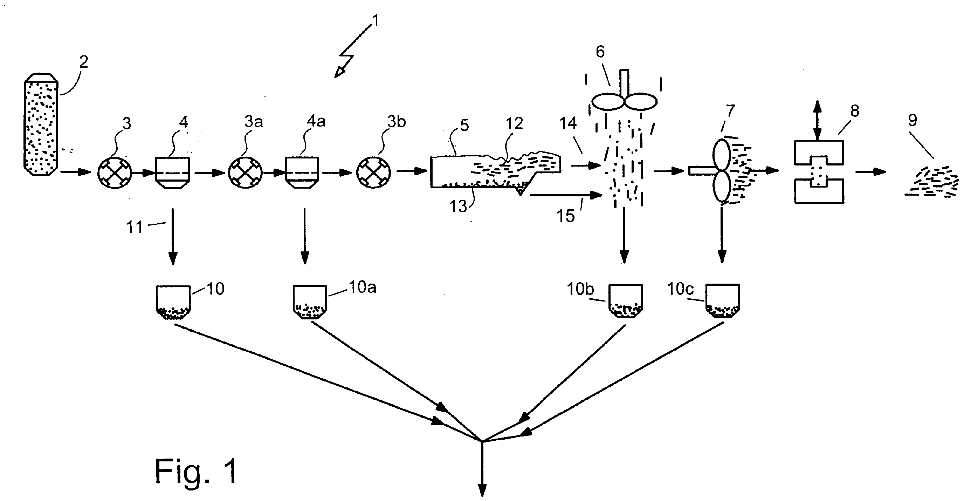

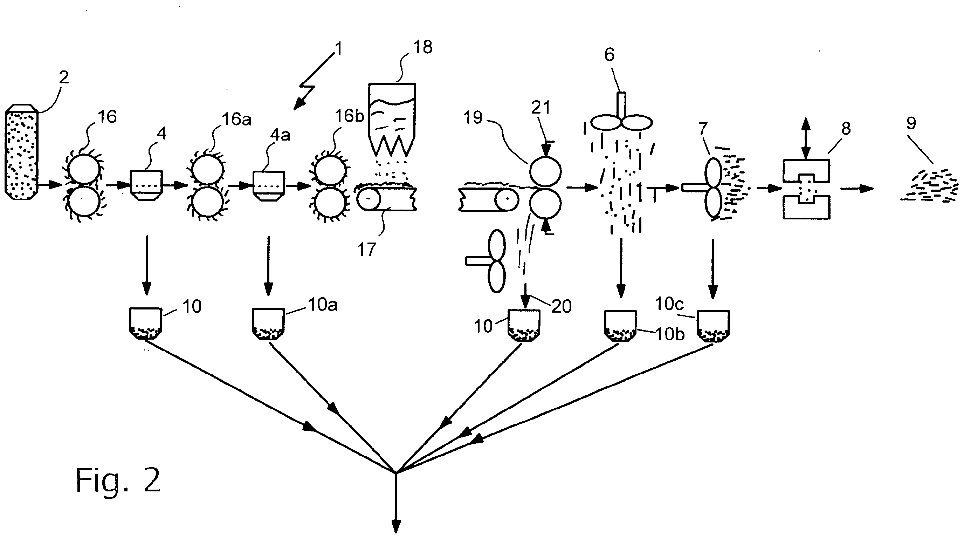

In Fig. 2 ist ein leicht abgewandeltes Ausführungsbeispiel der Erfindung dargestellt, wobei die funktionell gleichen Elemente die gleichen Bezugszeichen wie bei der Anlage gemäß Fig. 1 tragen.

In Abwandlung zum Ausführungsbeispiel der Fig. 1 sind hier sogenannte Riffelwalzen 16, 16b vorgesehen, um den Schrot aufzuschlagen. Nach Verlassen des letzten Walzenstuhles 16b werden die aufgeschlagenen Bestandteile mittels eines Förderbandes 17 weitergefördert und am Bandanfang durch eine Beregnungsanlage 18 befeuchtet.

Es hat sich gezeigt, dass durch die Befeuchtung insbesondere die Proteinbestandteile sich sehr stark aufblähen, so dass sie nachfolgend über ein Quetschsieb oder, wie in Fig. 2 angedeutet, über Quetschwalzen 19 von den Pflanzenfasern abscherbar sind und gemäß Pfeil 20 in ein Silo 10 abgeworfen werden können. Die Schableisten der Quetschwalzen sind mit 21 bezeichnet.

Die Erfindung ist nicht auf die dargestellte Anzahl der jeweiligen Behandlungsschritte beschränkt. Hier können auch weitere Behandlungen durch Mahlwerke bzw. Prallmühlen oder Riffelwalzen und entsprechende Silos vorgesehen sein, auch bedarf es nicht der linearen Führung der Produktströme, hier können auch Rückführungen etwa nach den Sieben in die davor angeordnete Prallmühle vorgesehen sein.

## Patentansprüche

1. Verfahren zur Aufbereitung von Sonnenblumen-Extraktionsschrot, insbesondere zur Gewinnung von Proteinen, wobei die Teilchen aus Schalenkernteilen und anhaftenden Proteinen des Extraktionsschrotes mittels Sieben voneinander getrennt werden,
**gekennzeichnet durch** folgende Verfahrensschritte:
Zerkleinern des Schrotes durch Aufschlagen in Schlagprallmühlen und/oder Riffelwalzen, Sieben des erzeugten Gemisches aus Grob- und Feinteilen, Trennen der Pflanzenschalen (Fasern) und Proteine durch Einsatz von Wasser, Trocknen der Bestandteile und Verpressen der holzigen Bestandteile zu Pellets als Feuerungsmittel zur Energieerzeugung, wobei wenigstens zwei Zerkleinerungsschritte in einer Schlagprallmühle und/oder Riffelwalze mit nachfolgendem Sieben vor der Wassertrennung durchgeführt werden und wobei das jeweilige Gemisch in den Schlagprallmühlen einer Schlagdauer von 5 bis 30 Sekunden unterworfen wird, wobei eine Trennung der Pflanzenschalen (Fasern) und Proteine durch Einbringen in einen Wasserabscheider und Entnehmen der schwimmenden Teile und der sich absetzenden Teile vorgenommen wird.

2. Verfahren nach Anspruch 1,
**dadurch gekennzeichnet,**
**dass** nach wenigstens einem Zerkleinerungsschritt und Siebschritt die verbleibenden Grobbestandteile beregnet werden und nach einer dem Aufquellen der Proteine dienenden Verweildauer die Proteine durch Quetschsieben und/oder Quetschwalzen von den holzigen Bestandteilen getrennt werden.

3. Verfahren nach einem der vorangehenden Ansprüche,
**gekennzeichnet durch**
einen Trocknungsschritt der erzeugten Fraktionen von Pflanzenteilen und Proteinen.

4. Verfahren nach einem der vorangehenden Ansprüche,
**gekennzeichnet durch**
einen Trennschritt durch Windsichtung.

5. Anlage zur Aufbereitung von Sonnenblumen-Extraktionsschrot, insbesondere zur Gewinnung von Proteinen, **gekennzeichnet durch**
wenigstens zwei Prallmühlen (3) und/oder Riffelwalzen-mahlwerke (16), eine Wassertrennanlage (5), in Form, eines Wasserabscheiders, Trocknungseinrichtungen (6), Silos (2, 10) für den Extraktionsschrot und die gewonnenen Produkte, eine Einrichtung (8) zur Erzeugung von Pellets sowie entsprechende Fördereinrichtungen zwischen den Anlageelementen.

6. Anlage nach Anspruch 5,
**dadurch gekennzeichnet,**
**dass** ein Förderband (17) mit einer Beregnungseinrichtung (18) sowie einer nachgeschalteten Quetscheinrichtung (19, 21) vorgesehen ist, wobei sich bei Gebrauch der Anlage ein Trockenschritt der erzeugten Fraktionen von Pflanzenteilen und Proteinen anschließt .

## Claims

1. A method for treating sunflower extraction meal, in particular for recovering proteins, wherein the particles of skin core parts and adhering proteins of the extraction meal are separated from one another by means of screening, **characterised by** the following method steps:
shredding the meal by impacting in impact mills and/or
corrugating rolls, screening the produced mixture of coarse and fine parts, separating the plant skins (fibres) and
proteins by using water, drying the components and pressing the woody components into pellets as a firing means for energy production, wherein at least two shredding steps are carried out in an impact mill and/or a corrugating roll followed by screening before water separation and wherein the respective mixture in the impact mills is subjected to an impact duration of 5 to 30 seconds, wherein a separation of the plant skins (fibres) and proteins is made by introducing into a water separator and removing the swimming parts and the settling parts.

2. The method according to claim 1,
**characterised in that**
after at least one shredding step and screening step, the remaining coarse components are irrigated and after a residence time for swelling of the proteins, the proteins are separated from the woody components by squeeze screening and/or squeeze rolling.

3. The method according to one of the preceding claims,
**characterised by**
a drying step of the produced fractions of plant parts and proteins.

4. The method according to one of the preceding claims, **characterised by**
a separating step by air classification.

5. An installation for treating sunflower extraction meal, in particular for recovering proteins,
**characterised by**
at least two impact mills (3) and/or corrugating roll grinders (16), a water separation installation (5) in the form of a water separator, drying means (6), silos (2, 10) for the extraction meal and the recovered products, a means (8) for producing pellets and corresponding conveyance means between the installation elements.

6. The installation according to claim 5,
**characterised in that**
a conveyor belt (17) with an irrigation means (18) and a downstream squeezing means (19, 21) is provided, whereby a drying step of the produced fractions of plant parts and proteins follows when the plant is in use.

## Revendications

1. Procédé pour le traitement de gruau d'extraction de graines de tournesol, notamment pour la production de protéines, les particules de fragments de graines et les protéines adhérentes du gruau d'extraction étant séparées par tamisage les unes des autres,
**caractérisé par** les étapes de procédé suivantes :
broyage du gruau par impact dans des broyeurs à impacts et/ou rouleaux onduleurs, tamisage du mélange obtenu composé de particules fines et grossières, séparation des coquilles végétales (fibres) et des protéines en utilisant de l'eau, séchage des composants et compression des composants ligneux en pellets comme moyen de combustion pour produire de l'énergie, au moins deux étapes de broyage étant effectuées dans un broyeur à impacts et/ou un rouleau onduleur suivies du tamisage et de la séparation à l'eau et chaque mélange dans les broyeurs à impacts étant soumis à une durée d'impact de 5 à 30 secondes, une séparation des coquilles végétales (fibres) et des protéines étant effectuée en les introduisant dans un séparateur d'eau et en retirant les pièces flottantes et les pièces se déposant.

2. Procédé selon la revendication 1,
**caractérisé en ce**
**qu'**après au moins une étape de broyage et une étape de tamisage, les composants grossiers restants sont arrosés et les protéines sont séparées des composants ligneux par tamisage à compression et/ou par des rouleaux pinceurs après un temps de séjour servant à faire gonfler les protéines.

3. Procédé selon l'une des revendications précédentes,
**caractérisé par**
une étape de séchage des fractions générées de parties végétales et de protéines.

4. Procédé selon l'une des revendications précédentes,
**caractérisé par**
une étape de séparation par séparation aéraulique.

5. Installation pour le traitement de gruau d'extraction de graines de tournesol, notamment pour la production de protéines,
**caractérisée par**
au moins deux broyeurs à impacts (3) et/ou broyeurs à rouleau onduleur (16), un système de séparation des eaux (5), sous la forme d'un séparateur d'eau, des dispositifs de séchage (6), des silos (2, 10) pour le gruau d'extraction et les produits obtenus, un dispositif (8) pour générer des pellets ainsi que par des équipements de convoyage correspondants entre les éléments de l'installation.

6. Installation selon la revendication 5,
**caractérisée en ce**
**qu'**une bande transporteuse (17) est prévue avec un dispositif d'arrosage (18) ainsi qu'avec un dispositif d'écrasement (19, 21) placé en aval, de sorte qu'une étape de séchage des fractions produites de parties de plantes et de protéines s'ensuit lorsque l'installation est utilisée.
